# FASCICULE DE BREVET EUROPEEN

(11) **EP 1 683 406 B1**
(45) Date de publication et mention de la délivrance du brevet: **25.06.2008**
(21) Numéro de dépôt: 06100728.2
(22) Date de dépôt: 23.01.2006
(51) Int. Cl.: A01D 34/416

(54) **Filament de coupe de composition améliorée pour coupe-bordures, débroussailleuses, etc.**
Mähfaden mit einer verbesserten Zusammensetzung für Kantentrimmer, Buschschneider oder ähnlichen
Cutting line with Improved composition for edge trimmers, brush cutters or similar

(30) Priorité: 24.01.2005 FR 0500702
(43) Date de publication de la demande: 26.07.2006
(73) Titulaire: SPEED FRANCE, 69400 Arnas (FR)
(72) Inventeur: LEGRAND, Emmanuel, 01240 ST GERMAIN SUR RENON (FR)
(74) Mandataire: Tetaz, Franck Claude Edouard

(56) Documents cités:
- WO-A-03/103372
- FR-A- 2 789 094
- US-A1- 2002 023 356

## Description

La présente invention concerne d'une façon générale les appareils pour couper la végétation tels que les débroussailleuses, coupe-bordures et assimilés, et vise plus particulièrement de nouveaux filaments de coupe pour de tels appareils, tel que décrit dans le document FR-A-2 789 094.

Un filament de coupe est généralement réalisé par extrusion/étirage de polyamide, et l'on a connu depuis quelques années des évolutions significatives de ces filaments : formes adaptées pour réduire le bruit, améliorer l'efficacité de coupe, etc., fils en plusieurs matériaux pour améliorer l'efficacité de coupe, améliorer la biodégradabilité, réduire le coût de revient, etc.

On connaît ainsi des filaments de coupe réalisés à partir de deux composants ou davantage, en général par un procédé de co-extrusion à partir de deux sources de matériaux différents.

Plus précisément, on connaît des filaments comportant un corps principal ou âme en polyamide et une partie secondaire, telle qu'une peau entourant l'âme entièrement ou partiellement, en un matériau différent de celui de l'âme. On entend ici par « matériau différent » un matériau ayant au moins une propriété physique ou chimique différente du matériau de l'âme ; il peut s'agir en particulier d'un polyamide ou copolyamide différent de celui de l'âme, ou d'autres matériaux naturels ou synthétiques ou leurs mélanges.

Mais en règle générale, un filament de coupe satisfaisant résulte d'un compromis entre une certaine souplesse, permettant en particulier au filament de ne pas se rompre lorsqu'il rencontre des obstacles au cours du travail, et une certaine dureté lui permettant en particulier d'attaquer les végétaux avec l'énergie requise et de ne pas s'user prématurément.

La présente invention vise à proposer un filament de coupe ayant des propriétés améliorées au regard de ce compromis.

Elle propose ainsi un filament de coupe pour un appareil de coupe de végétation tel que débroussailleuse ou coupe-bordures, caractérisé en ce qu'au moins une partie du filament est réalisée à base de polyamide 6-6 enrichi en agent assouplissant.

Certains aspects préférés, mais non limitatifs, de ce filament sont les suivants :
* l'agent assouplissant comprend du caprolactame.
* l'agent assouplissant est constitué essentiellement de caprolactame.
* le filament comprend une première partie constituant un corps du filament et un deuxième partie constituant au moins une zone d'attaque des végétaux, ladite première partie étant réalisée à base d'un mélange de polyamide 6-6 et d'un agent assouplissant.
* ladite deuxième partie du filament est également réalisée à base de polyamide 6-6.
* la deuxième partie du filament contient également un agent assouplissant, et en ce que la première partie contient une proportion d'assouplissant plus importante que la deuxième partie.
* la première partie du filament contient de 6 à 15% de caprolactame, et de préférence de 11 à 14% de caprolactame.
* la deuxième partie du filament contient de 0 à 4% de caprolactame.
* la deuxième partie du filament contient au moins un produit de charge.
* la deuxième partie du filament comporte des aménagements aptes à favoriser la coupe des végétaux.
* la deuxième partie du filament est essentiellement répartie en deux zones du filament agencées latéralement à l'opposé l'une de l'autre dans la position de travail du filament.

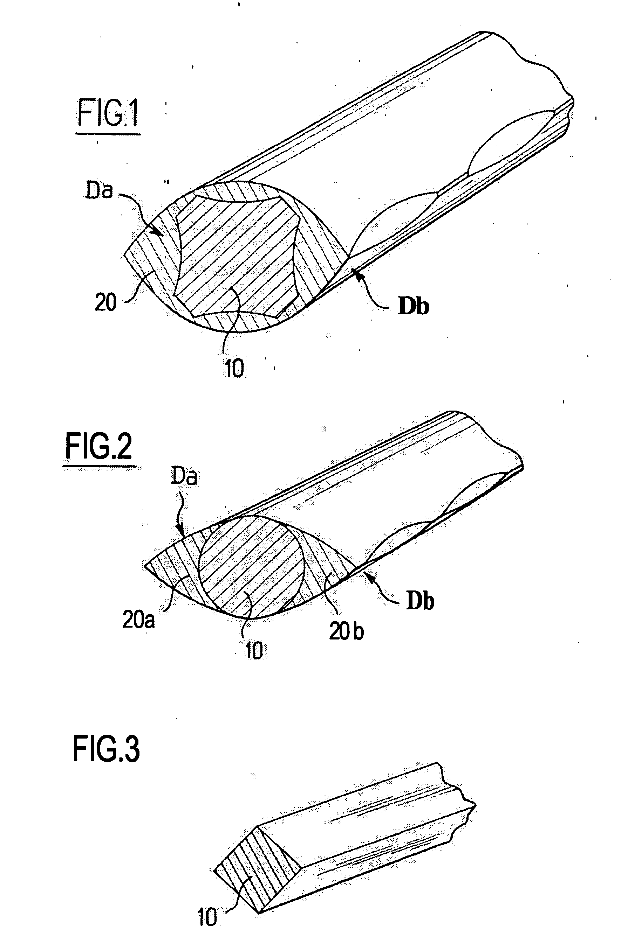

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels les figures 1 à 3 sont trois vues en perspective coupée de filaments de coupe selon des première, deuxième et troisième formes de réalisation de l'invention respectivement.

En référence à la figure 1, on a représenté un filament de coupe pour appareil de coupe de végétaux motorisé tel que taille-bordures, débroussailleuse, etc., qui comprend une âme 10 et une peau 20.

Dans le présent exemple, la peau entoure entièrement l'âme.

L'âme présente une section transversale de forme simple ou complexe. En l'espèce, l'âme présente une section générale en losange avec des arêtes biseautées.

De même, la peau 20 peut présenter toute section transversale souhaitée. Dans le présent exemple, la peau présente un contour avec une convexité supérieure et une convexité inférieure et définit deux zones dentées Da et Db d'attaque des végétaux, faisant saillie latéralement de part et d'autre de l'âme 10.

Selon l'invention, l'âme est réalisée en polyamide 6-6 additionné d'une certaine quantité d'un agent d'assouplissement. La Demanderesse a découvert qu'un agent assouplissant particulièrement approprié était le ε-caprolactame comonomère (ci-après désigné simplement par caprolactame), dont on observera ici qu'il s'agit de la matière première qui se polymérise en polyamide 6.

Pour aboutir à un effet d'assouplissement approprié pour un usage en tant que filament de coupe, on utilise une proportion de caprolactame comprise entre environ 6 et 15%, de préférence entre 11 et 14%.

La peau 20 est ici réalisée également en polyamide 6-6, avec cette fois-ci une quantité d'agent assouplissant (ici encore typiquement du caprolactame) beaucoup plus faible voire nulle. On prévoit typiquement une proportion de 2 à 3% de caprolactame.

On obtient ainsi un filament de coupe ayant des propriétés améliorées, en ce sens qu'on bénéficie de la robustesse inhérente au polyamide 6-6 sans en avoir le côté cassant. En particulier, grâce au recours à une âme enrichie en agent assouplissant, le filament présente une flexibilité satisfaisante, tout en étant plus résistant mécaniquement qu'un filament à base de polyamide 6.

En outre, le recours pour la peau 20 à un polyamide 6-6 non assoupli, ou en tout cas sensiblement moins assoupli que l'âme, lui confère une dureté appropriée pour le travail de coupe sur les végétaux, et en particulier une meilleure résistance à l'usure.

La figure 2 illustre un autre mode de réalisation de l'invention, avec une âme centrale 10 et deux ailes 20a, 20b indépendantes l'une de l'autre, constituant ici encore des zones de coupe dentées Da et Db.

L'âme 10 présente ici une section transversale circulaire, et les deux zones de coupe sont ici isolées l'une de l'autre.

On utilise ici encore, pour l'âme un polyamide 6-6 enrichi en agent assouplissant tel que le caprolactame, et pour les deux zones de coupe un polyamide 6-6 non assoupli ou sensiblement moins assoupli.

Enfin la figure 3 illustre un autre mode de réalisation d'un filament de coupe selon l'invention, constitué d'un matériau unique. La section transversale du filament est ici un losange symétrique. Il est réalisé avec le même matériau que l'âme des filaments des figures 1 et 2, à savoir du polyamide 6-6 assoupli par exemple avec entre 11 et 14% de caprolactame.

Les filaments selon l'invention sont avantageusement fabriqués par un procédé conventionnel d'extrusion/étirage (co-extrusion dans le cas de filaments composés de deux matériaux ou davantage). L'agent assouplissant est alors soigneusement mélangé au polyamide 6-6 fondu en amont du processus d'étirage.

Lorsque le filament comporte des dents ou autres reliefs ou creux destinés à améliorer certaines de ses propriétés (efficacité de coupe, niveau de bruit en fonctionnement, etc., ceci est réalisé soit au cours du processus d'extrusion/étirage, soit en aval de ce processus, par exemple à l'aide de couteaux, etc. d'enlèvement de matière.

Par ailleurs, un filament selon l'invention peut comporter, outre un corps principal en polyamide 6-6 enrichi en agent assouplissant donnant la souplesse voulue au filament, toute autre partie en un matériau qui peut appartenir ou non à la famille des polyamides, et qui peut contenir ou non des produits de charge tel que fibres minérales, etc.

A cet égard, l'invention peut être combinée par l'homme du métier avec de nombreuses autres améliorations généralement connues dans le domaine des filaments de coupe (filaments de forme particulière et/ou poly-matériaux pour améliorer l'efficacité de coupe, réduire le bruit de fonctionnement, améliorer la biodégradabilité, éviter les phénomènes de collage, etc.)

Bien entendu, la présente invention n'est nullement limitée aux formes de réalisation décrites ci-dessus et représentées sur les dessins, mais l'homme du métier saura y apporter de nombreuses variantes et modifications.

## Revendications

1. Filament de coupe pour un appareil de coupe de végétation tel que débroussailleuse ou coupe-bordures, **caractérisé en ce qu'**au moins une partie (10) du filament est réalisée à base de polyamide 6-6 enrichi en agent assouplissant.

2. Filament selon la revendication 1, **caractérisé en ce que** l'agent assouplissant comprend du caprolactame.

3. Filament selon la revendication 2, **caractérisé en ce que** l'agent assouplissant est constitué essentiellement de caprolactame.

4. Filament selon l'une des revendications 1 à 3, **caractérisé en ce que** le filament comprend une première partie (10) constituant un corps du filament et un deuxième partie (20 ; 20a, 20b) constituant au moins une zone d'attaque des végétaux, ladite première partie étant réalisée à base d'un mélange de polyamide 6-6 et d'un agent assouplissant.

5. Filament selon la revendication 4, **caractérisé en ce que** ladite deuxième partie (20 ; 20a, 20b) est également réalisée à base de polyamide 6-6.

6. Filament selon la revendication 5, **caractérisé en ce que** la deuxième partie (20 ; 20a, 20b) contient également un agent assouplissant, et **en ce que** la première partie (10) contient une proportion d'assouplissant plus importante que la deuxième partie.

7. Filament selon la revendication 6, **caractérisé en ce que** la première partie contient de 6 à 15% de caprolactame, et de préférence de 11 à 14% de caprolactame.

8. Filament selon l'une des revendications 5 à 7, **caractérisé en ce que** la deuxième partie contient de 0 à 4% de caprolactame.

9. Filament selon l'une des revendications 5 à 8, **caractérisé en ce que** la deuxième partie contient au moins un produit de charge.

10. Filament selon l'une des revendications 4 à 9, **caractérisé en ce que** la deuxième partie comporte des aménagements aptes à favoriser la coupe des végétaux.

11. Filament selon la l'une des revendications 4 à 10, **caractérisé en ce que** la deuxième partie est essentiellement répartie en deux zones du filament agencées latéralement à l'opposé l'une de l'autre dans la position de travail du filament.

## Claims

1. A cutting filament for a plant-cutting device such as a scrub cutter or edge trimmer, **characterized in that** at least one portion (10) of the filament is made on the basis of polyamide 6-6 enriched with a softening agent.

2. The filament according to claim 1, **characterized in that** the softening agent comprises caprolactam.

3. The filament according to claim 2, **characterized in that** the softening agent essentially consists of caprolactam.

4. The filament according to any of claims 1 to 3, **characterized in that** the filament comprises a first portion (10) forming a body of the filament and a second portion (20; 20a, 20b) forming at least one area for attacking plants, said first portion being made on the basis of a mixture of polyamide 6-6 and a softening agent.

5. The filament according to claim 4, **characterized in that** said second portion (20; 20a, 20b) is also made on the basis of polyamide 6-6.

6. The filament according to claim 5, **characterized in that** the second portion (20; 20a, 20b) also contains a softening agent and **in that** the first portion (10) contains a larger proportion of softening agent than the second portion.

7. The filament according to claim 6, **characterized in that** the first portion contains from 6 to 15% of caprolactam, and preferably from 11 to 14% of caprolactam.

8. The filament according to any of claims 5 to 7, **characterized in that** the second portion contains from 0 to 4% of caprolactam.

9. The filament according to any of claims 5 to 8, **characterized in that** the second portion contains at least one filler product.

10. The filament according to any of claims 4 to 9, **characterized in that** the second portion includes arrangements able to promote cutting of plants.

11. The filament according to any of claims 4 to 10, **characterized in that** the second portion is essentially distributed in two areas of the filament laid out sideways opposite to each other in the working position of the filament.

## Patentansprüche

1. Mähfaden für einen Pflanzenschneider, wie einen Buschschneider oder Kantentrimmer, **dadurch gekennzeichnet, dass** wenigstens ein Teil (10) des Fadens auf der Basis von mit einem Weichmacher angereichertem Polyamid 6-6 hergestellt ist.

2. Faden gemäß Anspruch 1, **dadurch gekennzeichnet, dass** der Weichmacher Caprolactam umfasst.

3. Faden gemäß Anspruch 2, **dadurch gekennzeichnet, dass** der Weichmacher im Wesentlichen aus Caprolactam gebildet ist.

4. Faden gemäß einem der Ansprüche 1 bis 3, **dadurch gekennzeichnet, dass** der Faden einen ersten Teil (10) umfasst, der einen Körper des Fadens bildet, und einen zweiten Teil (20; 20a, 20b), der wenigstens einen Angriffsbereich für Pflanzen bildet, wobei der erste Teil auf der Basis einer Mischung von Polyamid 6-6 und einem Weichmacher hergestellt ist.

5. Faden gemäß Anspruch 4, **dadurch gekennzeichnet, dass** der zweite Teil (20; 20a, 20b) auch auf Basis von Polyamid 6-6 hergestellt ist.

6. Faden gemäß Anspruch 5, **dadurch gekennzeichnet, dass** der zweite Teil (20; 20a, 20b) auch einen Weichmacher enthält, und dass der erste Teil (10) einen höheren Anteil an Weichmacher als der zweite Teil enthält.

7. Faden gemäß Anspruch 6, **dadurch gekennzeichnet, dass** der erste Teil zwischen 6 und 15% Caprolactam, und vorzugsweise zwischen 11 und 14% Caprolactam, enthält.

8. Faden gemäß einem der Ansprüche 5 bis 7, **dadurch gekennzeichnet, dass** der zweite Teil zwischen 0 und 4% Caprolactam enthält.

9. Faden gemäß einem der Ansprüche 5 bis 8, **dadurch gekennzeichnet, dass** der zweite Teil wenigstens einen Füllstoff enthält.

10. Faden gemäß einem der Ansprüche 4 bis 9, **dadurch gekennzeichnet, dass** der zweite Teil Einrichtungen umfasst, die ausgelegt sind, den Schnitt der Pflanzen zu begünstigen.

11. Faden gemäß einem der Ansprüche 4 bis 10, **dadurch gekennzeichnet, dass** der zweite Teil in im Wesentlichen zwei Bereiche des Fadens eingeteilt ist, die in der Arbeitsposition des Fadens seitlich einander gegenüberliegend angeordnet sind.
